Europäisches Patentamt

European Patent Office

Office européen des brevets

Veröffentlichungsnummer: **0 316 570**

**A2**

# EUROPÄISCHE PATENTANMELDUNG

Anmeldenummer: 88116819.9

Anmeldetag: 11.10.88

Int. Cl.⁴: **B07B 1/18 , D21D 5/16**

Priorität: 14.11.87 DE 3738746
11.05.88 DE 3816152

Veröffentlichungstag der Anmeldung:
**24.05.89 Patentblatt 89/21**

Benannte Vertragsstaaten:
**AT BE CH DE ES FR GB IT LI NL SE**

Anmelder: **J.M. Voith GmbH
Postfach 1940 St. Pöltener Strasse 43
D-7920 Heidenheim(DE)**

Erfinder: **Musselmann, Walter
Franz Marc Strasse 32
D-7920 Heidenheim(DE)**

Siebkorb und Verfahren zu dessen Herstellung.

Der erfindungsgemäße Siebkorb mit parallel zu seiner Rotationssymmetrieachse verlaufenden Siebschlitzen besteht aus einzelnen Profilstäben 1, die in vorher durch genaues Fräsen hergestellten Aussparungen 3 von Tragringen 2 in denselben durch Schweißen oder Löten festgelegt sind. Es können dadurch Siebschlitze geringster Weite von z.B. 0,2 mm mit sehr großer Genauigkeit hergestellt werden, so daß sie sich für die Sortierung von Fasersuspensionen, insbesondere der Papierindustrie, eignen.

Fig.2

EP 0 316 570 A2

## Siebkorb und Verfahren zu dessen Herstellung

Die Erfindung betrifft einen Siebkorb entsprechend dem Oberbegriff des Patentanspruchs 1 und ein Verfahren zu seiner Herstellung. Ein solcher Siebkorb ist bekannt aus der DE-OS 33 27 422.

Weil Siebkörbe mit gefrästen Schlitzen die Nachteile eines hohen Arbeitsaufwandes, und zwar durch das Fräsen selbst und die Nacharbeitung der durch das Fräsen entstehenden scharfen Kanten haben, ist versucht worden, durch Verschweißen auf Tragelementen solche Siebkörbe mit Schlitzen, die sehr fein, und zwar bis hinunter zu 0,15 mm Schlitzweite sein können, herzustellen. Man hat zu dem Zweck vorzugsweise Stäbe mit Dreiecksprofil verwendet. Die Siebe haben an sich einen hohen Wirkungsgrad, jedoch ist es sehr schwierig, die geringen Spaltweiten mit entsprechender Genauigkeit und Gleichmäßigkeit herzustellen. Ferner besteht noch der große Nachteil, daß diese Siebkörbe wegen der zumeist nur geringen dreiecksförmigen Querschnittsfläche sowie wegen des geringen festgeschweißten Querschnitts nur eine geringe Festigkeit aufweisen.

Um diese Siebkörbe wirtschaftlich herstellen zu können, hat man bisher den Weg beschritten, entweder eine ebene Siebmatte herzustellen, die dann später in die runde, rotationssymmetrische Form des Siebkorbes gebogen wurde, oder man hat im Widerspruch zu der endgültigen, späteren Form des Siebkorbes die dreiecksförmigen Stäbe auf einer Art Drehmaschine mit einem Zylinder wendelförmig auf parallelen Haltestäben aufgewickelt. Nach Aufschneiden dieses konträren Siebkorbes - der ja praktisch in Umfangsrichtung verlaufende Schlitze aufweist - wurde diese Siebkorbmatte gestreckt und dann in entgegengesetzter Richtung zu dem Siebkorb verformt, bei dem dann die Schlitze zwischen den dreiecksförmigen Profilstäben parallel zur Rotationssymmetrieachse verlaufen. Diese Arbeitsverfahren führen zu großen Fehlerquellen der Genauigkeit der Weiten der Siebschlitze als auch hinsichtlich der gebotenen Festigkeit. Nach dem Biegen mußten ferner noch Tragringe auf die Halteelemente der Profilstäbe geschweißt werden, um die nötige Festigkeit des Siebkorbes herzustellen. Trotz dieses Arbeitsaufwandes ergab sich jedoch der Nachteil einer nicht durchweg gleichmäßigen Spaltweite, so daß der Wirkungsgrad dieser Siebkörbe relativ schlecht war.

Die Aufgabe der Erfindung ist es, einen Siebkorb anzugeben, der leicht herstellbar ist und eine große Festigkeit und ferner eine genügende Genauigkeit der Schlitzweiten ohne scharfe Kanten der Siebschlitze aufweist.

Diese Aufgabe wird erfindungsgemäß bei einem Siebkorb der eingangs genannten Art durch die Merkmale des kennzeichnenden Teils des Patentanspruchs 1 gelöst.

Es werden vorzugsweise kräftige, kompakte Profile, also keine mit schlankem oder sogar geknicktem bzw. stark eingezogenem Querschnitt (mit Eckenwinkeln, die kleiner als 40° bzw. größer als 230° sind) verwendet, so daß der Siebkorb schon aufgrund dieser kräftigen Profile auch insgesamt eine große Festigkeit erhält.

Dabei bestehen noch weitere Vorteile gegenüber den bisher bekannten Siebkörben, nämlich wie der, daß auch bei verschiedenen Siebkorbdurchmessern keine Veränderung der Oberflächenstruktur, insbesondere auf der Zuströmseite der Siebfläche auftritt, sowie daß ohne weiteres eine unterschiedliche Oberflächenstruktur hergestellt werden kann, um den Sortiereffekt zu beeinflussen. Die Siebkörbe weisen eine hohe Präzision der gewünschten Spaltweite auf, da durch Wahl der Teilung der Kerben bzw. Zähne in den Tragringen diese gewünschte Position bzw. jeder gewünschte Abstand der Profilstäbe erreicht werden kann. Das Verzahnungswerkzeug der Verzahnungsmaschine arbeitet mit sehr großer Genauigkeit, so daß entsprechend den Maßtoleranzen des Profils der Stäbe eine Toleranz von 0,1 bis sogar von 0,05 mm für die Weite der Schlitze erzielbar ist.

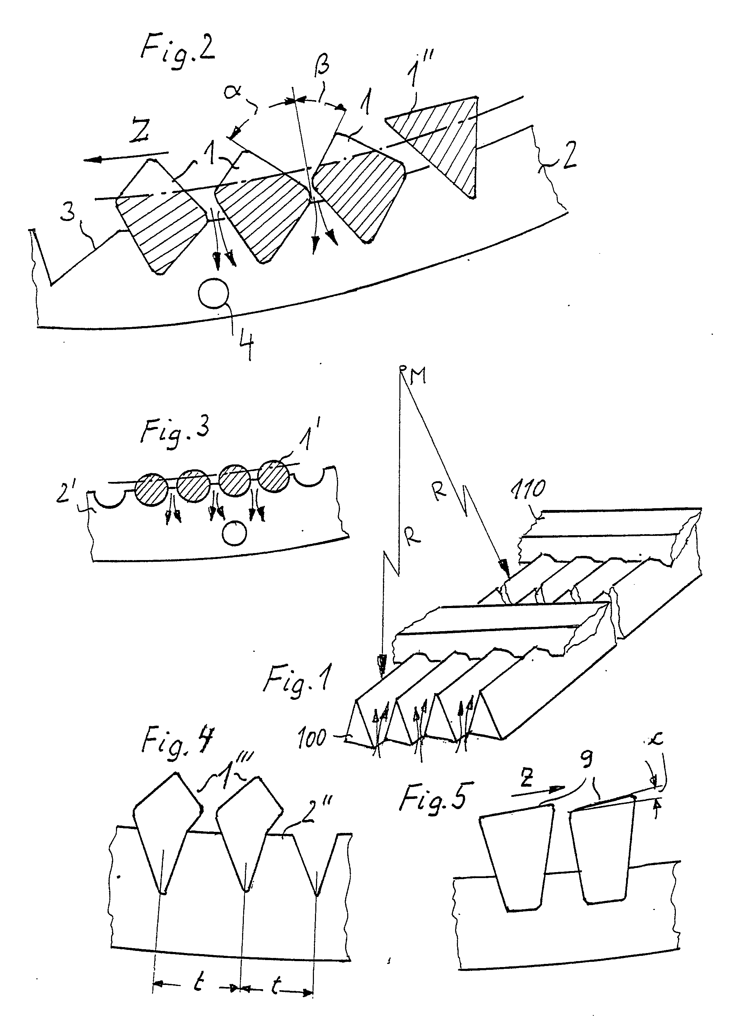

Nachfolgend wird noch anhand von Fig. 1 auf den Stand der Technik eingegangen und die Erfindung anhand von Ausführungsbeispielen gemäß Figur 2, 3, 4, 5, 7 und 8 der zugehörigen Zeichnung beschrieben, wobei diese einen sektoriellen Querschnitt für den Siebkorb in vergrößertem Maßstab zeigen.

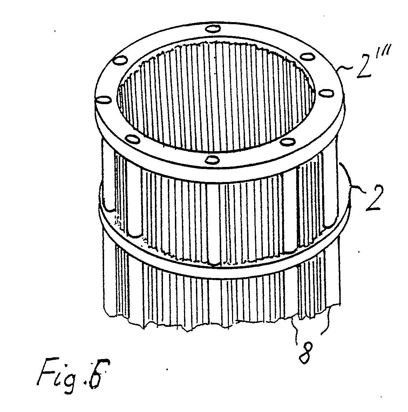

Fig. 6 zeigt einen erfindungsgemäßen Siebkorb perspektivisch in einer weiteren Ausführungsform.

Ähnliche Teile sind in den Figuren mit dem gleichen Bezugszeichen, diese aber jeweils verschieden apostrophiert, versehen.

In Figur 1 ist ein Siebkorb entsprechend dem Stand der Technik ausschnittsweise dargestellt, wobei dreieckförmige Profilstäbe 100 an Haltestegen 110 durch z.B. Reibschweißen oder Preßschweißen befestigt sind. Es wird praktisch ein ebenes Gitterwerk hergestellt, das nach Abschneiden auf das benötigte Maß zu einem Siebkorb gerundet wird. Dabei tritt natürlich in der Längsrichtung an einer Stelle eine Naht auf, die ebenfalls zu einer Schwachstelle des Siebkorbes werden kann. Es ist auch möglich, entsprechend dem angedeuteten Radius R mit dem Mittelpunkt M Profildraht auf einen Tragzylinder wendelförmig mit dichtem gegenseitigen Abstand der einzelnen Windungen auf parallel zur Zylinderachse in gegenseitigem gleichem Abstand angeordnete Haltestäbe 110 aufzubringen, wobei im allgemeinen der Zylinder rotierbar angeordnet ist. Es erfolgt dann im allgemeinen durch Reib- oder Preßschweißen eine Verbindung der einzelnen Drahtwindungen mit den Haltestäben 110, wonach der entstandene Siebkorb - bei dem die zwischen den Drahtwindungen verlaufenden Siebschlitze in der falschen Richtung, d.h. in Umfangsrichtung verlaufen - an einer Stelle durch einen Schnitt parallel zu einem Haltestab 110 aufgetrennt wird, dann zu einem ebenen Gitterwerk verformt wird und schließlich durch Rollen bzw. Einrunden der Haltestäbe 110 zu einem fertigen Siebkorb umgeformt wird. Dabei treten die schon oben beschriebenen Nachteile auf.

Insbesondere sind die Haltestäbe 110 (die späteren Halteringe) relativ dünn und bilden also keine tragfähigen Ringe, so daß auf diese zusätzlich Tragringe größeren Querschnitts aufgesetzt und mit den Halteringen verschweißt werden müssen.

In Figur 2 erkennt man den Tragring 2, in dessen Nuten die vier Profilstäbe 1 bzw. 1" festgelegt sind. Die Profilstäbe 1 haben einen Querschnitt, dessen Umrandungslinie von einem Polygonzug gebildet wird, hier mit vier Ecken und trapezförmig. Dabei ragt die eine Kante der Profilstäbe radial nach innen, zur Einlaß-oder Anströmseite der Siebfläche also im wesentlichen zur zentralen Achse des Siebkorbes, und die gegenüberliegende Kante radial nach außen. Durch Abdrehen der Profilstäbe radial innen auf einer Drehmaschine - siehe die strichpunktierte Linie - kann man dadurch eine bestimmte, gewollte "Rauhigkeit" der Siebkorboberfläche, im groben betrachtet, herstellen. Dadurch wird oft der (Durchsatz) Trennwirkungsgrad des Siebkorbes durch die freie Siebfläche verbessert.

Als Schweißverfahren kommt das Elektro-, Laserstrahl- und Elektronenstrahlschweißen oder auch autogenes Schweißen in Frage; aber auch ein Lötverfahren, insbesondere Hartlöten, ist geeignet. Ein anderes geeignetes, hochwertiges Lötverfahren ist das Vakuum-Löten, wobei unter Vakuum der gesamte Siebkorb bei Temperaturen um 1000° C im Vakuum verlötet wird. Für ein automatisiertes Fügeverfahren kommt aber eher eines der Schweißverfahren in Frage.

Es ist natürlich auch ein Siebkorb mit umgekehrter Betriebsweise möglich, nämlich bei dem die Anströmseite der Siebfläche radial außen liegt. Dann hätten die Ringe 2 in Fig. 2 natürlich nur mit umgekehrter Krümmung gezeichnet zu werden brauchen.

Der Herstellvorgang ist etwa folgender:

Es wird ein Stapel von Tragringen 2 zusammengespannt und auf einer Verzahnungsmaschine mit den Öffnungen 3 versehen, die dem entsprechenden Abschnitt des Profilquerschnitts der Profilstäbe entsprechen. Dann wird mit Hilfe von hier nicht dargestellten Führungsstangen, die durch die Hilfsbohrungen 4 der Ringe gesteckt werden, unter Verwendung von Abstandshülsen ein Gerüst von Tragringen hergestellt, in das nach genauer Ausrichtung desselben die Profilstäbe eingelegt und durch einen Schweißvorgang zunächst festgepunktet und dann festgeschweißt werden. Das Schweißen kann auch auf einer automatischen Schweißanlage erfolgen. Die Profilstäbe werden konturmäßig festgeschweißt, d.h. im wesentlichen entlang den Kanten der Aussparungen 3. Man kann die den Siebkorb abschließenden Tragringe 3 etwas verstärkt ausführen, ansonsten sind aber keine weiteren Verstärkungen nötig, da wegen des kräftigen Profilquerschnitts der Profilstäbe 1 eine ausreichende Festigkeit des Siebkorbes bereits erzielt wird. Wie man sieht, ist hier ein etwa trapezförmiger Querschnitt der Profilstäbe gewählt worden, so daß sich bei entsprechender Anordnung derselben bzw. der Aussparungen 3 verschiedene Winkel der auflaufseitigen Kante a - Winkel alpha - und der ablaufseitigen Kante b - Winkel ß - erzielen lassen. Dies kann in manchen Fällen den Sortiereffekt verbessern, entweder hinsichtlich Trennwirkung oder hinsichtlich Durchsatz. Dies kann man aber auch in etwa mit genau quadratischen handelsüblichen Profilquerschnitten erreichen. Ganz rechts außen ist in Figur 2 auch noch angedeutet, daß man natürlich ebenfalls auch dreieckige Querschnitte 1" verwenden kann. Als Schweißverfahren bzw. Fügeverfahren kommt das Löten oder Elektroschweißen bzw. auch das Schweißen mit Laserstrahlen bzw. Elektronenstrahlen in Frage. Das Herstellen der Aussparungen 3 erfolgt für mehrere Tragringe 2 gemeinsam mit z.B. mittels einer Wälz-Stoß- bzw. Wälz-Fräs-Verzahnungsmaschine. Dadurch ist eine sehr hohe Genauigkeit des gegenseitigen Abstandes der Aussparungen und damit der Siebschlitze möglich.

In Figur 3 ist angedeutet, daß man als Profile auch Rundstäbe verwenden kann, die - z.B. auch nach Abdrehen entlang der strichpunktierten Linie dann - die Siebschlitze und Einzugsräume der Siebschlitze zwischen den Profilstäben ergeben. Durch die beiden Pfeile in den Figuren ist jeweils die Strömungsrichtung durch die Siebschlitze angedeutet. Der Pfeil Z zeigt jeweils in den Figuren die Hauptströmungsrichtung mit Bezug auf die Siebfläche. Sie ist im wesentlichen gleich der Umfangsrichtung der Siebfläche bzw. Siebkörbe.

Figur 5 zeigt eine Profilform, die kräftig ist, und durch die Neigung der zwischen den Eintrittskanten befindlichen "Dachfläche" 9 gegen die Umfangs- und Rotationsströmungsrichtung Z der Suspension mit dem Winkel C einen guten Abscheidewirkungsgrad mit sich bringt.

In Figur 6 ist ein erfindungsgemäßer Siebkorb in Ansicht perspektivisch dargestellt, und zwar für den Fall, daß entsprechend Fig. 4 die Stäbe 1 mit nicht so kräftigem Profil, d.h. kompaktem Querschnitt, wie in Fig. 2 verwendet werden. In Fig. 4 wird ein Profilquerschnitt in Form eines Fünfecks verwendet, das durch die Einziehung auf der rechten Seite relativ schlank ist. Hierdurch wird ein automatisches Festschweißen der Profilstäbe an den Ringen 2 schwieriger, möglicherweise auch nicht von so guter Qualität, so daß man hier die Ausführungsform nach Fig. 6 verwenden sollte, bei der eine Versteifung des Siebkorbes durch die kräftigen Längsstäbe 8 erzielt wird. Diese Stäbe 8 sind mit den Tragringen 2 verschweißt. Die Tragringe an den Enden des Siebkorbes 2''' kann man jeweils auch noch kräftiger ausführen, um Befestigungsmöglichkeiten für den Siebkorb in dem Gehäuse des Sortierers vorzusehen. Da hier die Festigkeit des Siebkorbes durch die Längsstäbe 8 wesentlich verstärkt wird, können die Schweißnähte für die Befestigung der Profilstäbe 1, 1' usw. eine geringere Festigkeit, z.B. einen geringeren Querschnitt aufweisen.

Insbesondere kann man dann auch die Stäbe 1, 1' usw. durch Klebung mit den Tragringen 2 verbinden.

Ferner können dann auch die Stäbe einen schwächeren, d.h. geringeren Profilquerschnitt erhalten, so daß mehr Siebschlitze für den Siebkorb erzielbar sind.

Diese Ausführungsform ermöglicht also auch kleinere Nuten der Tragringe, so daß man die "Verzahnung" derselben auch mittels Nutenstoßmaschine unter Zuhilfenahme eines Teilapparats, der die Nutenteilung t (siehe Figur 4) erzeugt, herstellen kann, ohne zu oft den Werkzeugstahl nachschleifen zu müssen.

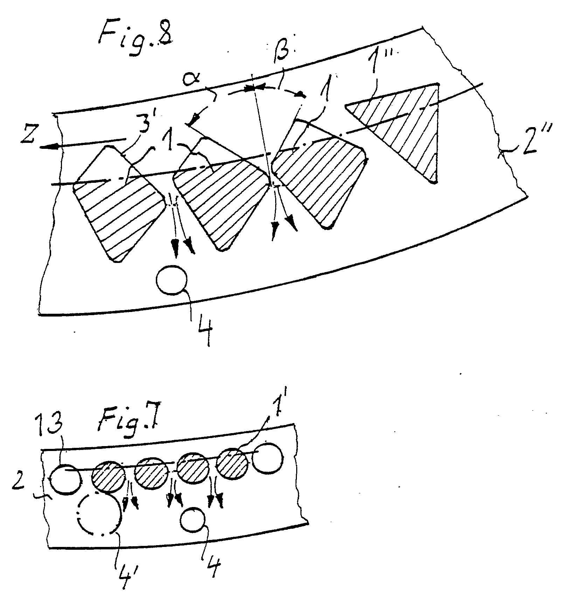

Nachfolgend wird die Erfindung anhand der Ausführungsbeispiele, die in den Figuren 7 und 8 der beigefügten Zeichnung dargestellt sind, erläutert.

In die zur Siebkorbachse senkrecht verlaufenden Ringe 2 werden mit Teilapparat und Bohrvorrichtung und Bohrern genau beabstandete, kreisrunde Löcher 13 eingebracht, die dem Querschnitt der dort unterzubringenden Stäbe 1' genau entsprechen. Geringe Toleranzabweichungen sind natürlich möglich. Weitere Löcher 4 dienen zur Ausrichtung der Ringe. Jedoch können sehr große Löcher 4' - die man z.B. an einer Stelle vorsehen kann, wo man eine entsprechende Bohrung 13 für die Stäbe 1' weggelassen hat -gleichzeitig zur Versteifung beim späterem Betrieb dienen, indem man in diese sehr starke Stangen zylindrischen Querschnitts einfügt und fest verschweißt. z.B. durch Elektroschweißen. Die Stäbe 1' können dann einen sehr kleinen Durchmesser aufweisen, so daß sich sehr viele Schlitze, die parallel zur Rotationssymmetrieachse des Siebkorbes verlaufen, ergeben. Je nach Betriebsart des Siebkorbes können dann entsprechend der strichpunktierten Linie durch einen Drehvorgang radial innen oder radial außen die Stäbe 1 eine abgeplattete, gerade Oberfläche erhalten. In Figur 8 ist dargestellt, daß man in die Ringe 2' bzw. deren Ausnehmungen 3' bei entsprechender nachträglicher Formgebung auch Stäbe 1 oder 1'' mit eckigem Profil - z.B. trapezförmig oder dreieckig -einfügen kann. Im Falle von trapezförmigen Stäben kann man verschiedene Winkel alpha und beta in bezug auf die Radiale der Flächen der Stäbe auf der Zuströmseite des Siebkorbes, also der Einströmseite der Fasern im Fall einer Fasersuspension, herstellen bzw. vorsehen. Dabei kann z.B. ein Rotor mit Flügeln die Drehrichtung gemäß Pfeil Z haben.

Besonders einfach ist natürlich die Ausführungsform nach Fig. 7, da sich die Bohrungen leicht herstellen lassen. Die Siebschlitze können dabei sehr eng ausgebildet werden und ihre Weite kann kleiner als 0,3 mm sein. Diese Weite kann aufgrund der Bauweise und Herstellungsverfahren des Siebkorbes sehr genau eingehalten werden.

## Ansprüche

1. Siebkorb mit parallel zur Rotationssymmetrieachse verlaufenden Stäben und diese verbindenden Ringen, wobei die Stäbe zwischen sich die Siebschlitze bilden, dadurch gekennzeichnet, daß der Siebkorb in Aussparungen (3) der Form eines Abschnitts des Querschnitts der Stäbe (1, 1', 1'') aufweisende Ringe (2, 2', 2'', 2''') eingelegte und durch Löten oder Schweißen, wie Elektro-, Laserstrahl- oder Elektronenstrahlschweißen oder autogenes Schweißen, mit dem entsprechenden Abschnitt ihres Querschnitts befestigte Stäbe (1, 1', 1'') polygonalen, dreieckigen oder kreisrunden Querschnitts aufweist.

2. Siebkorb nach Anspruch 1, dadurch gekennzeichnet, daß die Stäbe (1) im Querschnitt mehr als drei, insbesondere vier Ecken aufweisen, wobei keiner der Eckenwinkel kleiner als 40° und höchstens einer kleiner als 60° ist bzw. kein Eckenwinkel größer als 230° ist.

3. Siebkorb nach Anspruch 2, dadurch gekennzeichnet, daß die Stäbe (1) mit vierkant- oder trapezförmigem Querschnitt ausgebildet sind und mit einer Spitze (Ecke) desselben radial nach innen weisend angeordnet sind.

4. Siebkorb nach einem der Ansprüche 2 oder 3, dadurch gekennzeichnet, daß die Stäbe (1) mit vierkant- oder trapezförmigem Querschnitt ausgebildet sind und mit einer Spitze (Ecke) desselben radial nach außen weisend angeordnet sind.

5. Siebkorb nach einem der Ansprüche 3 bis 4. dadurch gekennzeichnet, daß parallel zur Rotationssymmetrieachse verlaufende Tragstäbe mit den Tragringen (2) einen Tragkäfig für die Stäbe (1, 1', 1'', 1''') bilden.

6. Siebkorb nach Anspruch 1, dadurch gekennzeichnet, daß die Ausnehmungen Löcher (13, 3') mit den Stäben (1'. 1''') entsprechendem Querschnitt sind.

7. Siebkorb nach Anspruch 6, dadurch gekennzeichnet, daß die Löcher (13) kreisrund sind.

8. Verfahren zur Herstellung eines Siebkorbes mit parallel zur Rotationssymmetrieachse verlaufenden Stäben und diese verbindenden Ringen, wobei die Stäbe zwischen sich die Siebschlitze bilden, dadurch gekennzeichnet, daß zahnartige Aussparungen in Tragringen (2, 2', 2'', 2''') auf einer Verzahnungsmaschine (z.B. Wälz-Fräs- oder Wälz-Stoßmaschine) oder mittels einer Stoßmaschine und Teilapparat (Teilkopf) hergestellt, daß Stäbe (1, 1'. 1'') mit einem den Aussparungen entsprechenden Abschnitt ihres Querschnitts in die Aussparungen eingelegt und durch Kleben, Löten oder Schweißen, wie Elektro-, Laserstrahl- oder Elektronenstrahlschweißen oder autogenes Schweißen, befestigt werden.

9. Verfahren zur Herstellung eines Siebkorbes nach Anspruch 8, dadurch gekennzeichnet, daß Profilquerschnitte mit mehr als drei Ecken verwendet werden, bei denen keiner der Eckenwinkel kleiner als 40° und höchstens einer kleiner als 60° ist bzw. kein Eckenwinkel größer als .140° ist, daß also der Form nach kompakte Profilquerschnitte verwendet werden.

10. Verfahren nach Anspruch 8 oder 9, dadurch gekennzeichnet, daß die radial vorstehende(n) Kante(n) des Querschnitts der Stäbe durch Überdrehen des Siebkorbes auf einer Drehmaschine in einem bestimten Maße weggearbeitet werden.

11. Verfahren zur Herstellung eines Siebkorbes nach einem der Ansprüche 8 bis 10, dadurch gekennzeichnet, daß eine Art Innenverzahnung der Tragringe (2) zur Bildung der Aussparungen (3) für die Stäbe (1', 1'') hergestellt wird.

12. Verfahren zur Herstellung eines Siebkorbes mit parallel zur Rotationssymmetrieachse verlaufenden Stäben und diese verbindenden, senkrecht zur Rotationssymmetrieachse verlaufenden Ringen, wobei die Stäbe zwischen sich die Siebschlitze bilden, wobei mittels Teilapparat (Teilkopf) genau bestimmte Ausnehmungen in den Ringen hergestellt werden, und die Stäbe entsprechenden Querschnitts in die Ausnehmungen eingelegt werden und durch Kleben, Löten oder Schweißen, wie Elektro-, Laserstrahl- oder Elektronenstrahlschweißen oder autogenes Schweißen, befestigt werden, dadurch gekennzeichnet, daß die Ausnehmungen (3) mittels Bohrvorrichtung und Bohrung zumindest zunächst kreisrund hergestellt werden.

Fig.2

Fig.3

Fig.1

Fig.4

Fig.5

Fig.6

Fig.8

Fig.7